# EUROPEAN PATENT APPLICATION

(11) **EP 4 686 240 A1**
(43) Date of publication of application: **28.01.2026**
(21) Application number: 24306233.8
(22) Date of filing: 23.07.2024
(51) Int. Cl.: H04W 8/20, H04W 12/30, H04W 4/50

(54) **METHOD FOR SENDING AND INSTALLING A PROFILE OF A MNO IN A SECURE ELEMENT INTEGRATED IN A TELECOMMUNICATION DEVICE**

(71) Applicant: THALES DIS FRANCE SAS, 92190 Meudon (FR)
(72) Inventor: DEMARTY, Joël, 35520 MONTREUIL LE GAST (FR); CHENE, Gilles, 13011 MARSEILLE (FR); ANSLOT, Michel, 06250 MOUGINS (FR)
(74) Representative: Scheer, Luc

(57) **Abstract**

The invention concerns a method for downloading and activating a profile of a MNO in a secure element 12 integrated in a telecommunication device 11, the downloading and activating being done in a factory 10, the method comprising:
- sending to the secure element 12 through the telecommunication device 11 a tag corresponding to a MNO to which the secure element 12 has to be connected;
- connecting, through a provisioning box 15, the secure element 12 to an external server 16 of the factory 10 that has been before provisioned with activation codes of profiles stored at SM-DP+ 19a, 19b, 19c of at least an elected MNO 18;
- Retrieving on the basis of the tag one of the activation codes for the secure element 12 corresponding to the MNO to which the secure element 12 has to be connected;
- Sending the activation code through the provisioning box 15 to download a profile to the elected MNO;
- Downloading, if the activation code is correct, a profile to the secure element 12 and activate it.

## Description

The present invention concerns telecommunications and in particular the loading of one or several profiles in a secure element (eUICC) in a device at the last stage of production of this device. This solution is also called IFPP (In-Factory Profile Provisioning).

IFPP manages and integrates eSIM profiles while an loT device (or Consumer Equipment - CE) is still in production in a factory, by way of an over-the-air profile loader in the manufacturing line. It also introduces benefits including reduced logistics and manufacturing complexity as well as improved battery life for the loT device itself (compared to loading the profile in the field). In-Factory Profile Provisioning capitalizes on the benefits introduced by eUICC - eSIMs and iSIMs - which embeds the Subscriber Identification Module (SIM) into loT device's main circuit board, and eliminates the need for a separate plastic card. IFPP also applies to consumer equipments like smartphones for example.

IFPP securely loads relevant MNO or MVNO SIM profiles or an OEM profile (in general a profile of the end-user of the device) onto devices during the manufacturing or order fulfilment process. This has significant implications for manufacturers in terms of streamlining their own processes, and allowing for dynamic changes to the production line based on characteristics such as the geographic location into which the device is to be deployed.

Instead of managing a physical inventory of plastic SIMs that would be manually fitted into each device, the manufacturer can request eSIM profiles from different operators and these are loaded over-the-air when the device connects to a network. This can either be a test network or a public network depending on the initial startup profile on the SIM.

Typically, this process will be combined with the flashing of the device firmware or other software as part of manufacturing or fulfillment.

While IFPP can be used in conjunction with Remote Sim Provisioning (RSP) to provide even greater flexibility for loT deployments, it is seen as an alternative to in-the-field provisioning, which may not be appropriate for many forms of loT and M2M devices.

IFPP is a great asset for embedding cellular SIM profiles into loT and M2M devices, simplifying supply chains, reducing operational costs, and improving in-the-field operational performance. The journey to highly scalable loT and M2M deployments via eSIM and RSP doesn't stop with SGP.41. Standardized support for IFPP is to be realized through GSMA specification SGP.41/42, where the working group is developing a specification as part of its eSIM and RSP standardization activities.

The specifications (SGP.41/42) will simplify the loading of operator profiles at the manufacturing stage but the standard is currently awaiting completion, with commercial implementations still a few years out.

While the SGP.42 standard can be expected to arrive around 2024-2025 timeframe, there are proprietary IFPP-enabled solutions already on the market that will bridge the evolution gap and offer an upgrade path.

The current IFPP solution, which is proposed in WG1 of the GSMA is based on the Bound Profile Package (as defined in SGP.22) and requires to know the EID and the public key of the eSIM ahead of time which requires strict tracking of the supply chain. This solution is leveraging a lot from SGP.22 and does not require to modify the eSIM and does not require to SAS certify the factory.

However, it has multiple issues:
- it requires new eSIM (SGP.42) and needs specific integration on the factory floor and in the device;
- the FPA (Factory Profile Assistant) used in the future IFPP standard to load a profile in the eSIM needs to be installed and managed by the device manufacturer;
- It requires to know the EID in advance;
- It needs to be adapted depending on the eSIM installed in the device, either loT SGP.32 or Consumer SGP.22.

The present invention proposes to avoid these issues now and is forward compatible with SGP.32 and SGP.42.

More precisely, it is important to give a way to have simple provisioning at the factory with very little impact on the factory configuration.

The invention proposes a method according to claims 1 and 2, an applet according to claim 3 and a server according to claim 4.

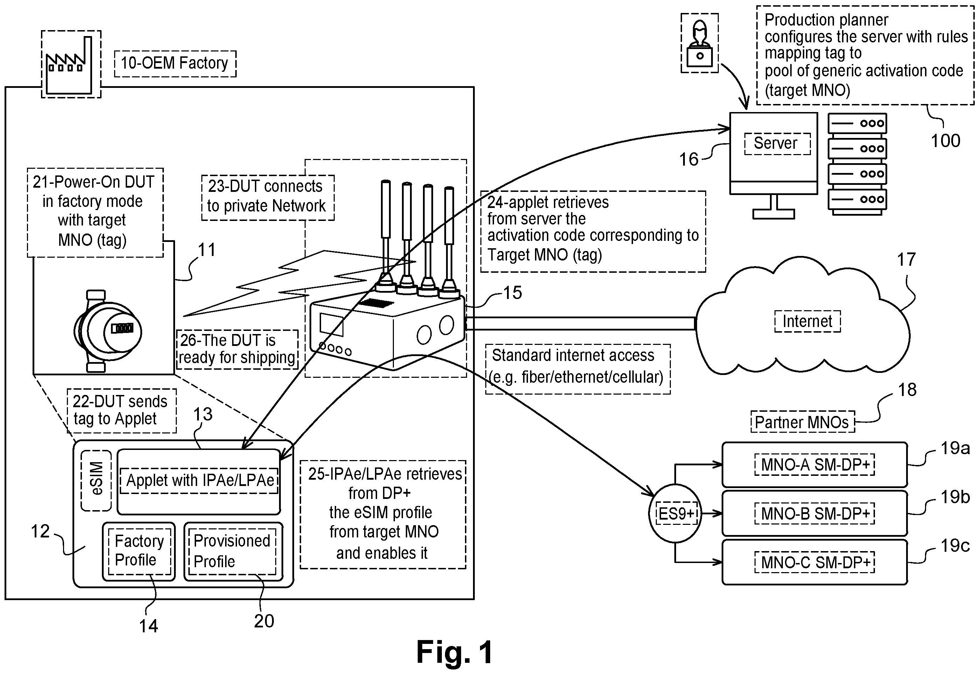

The invention will be better understood by reading the following description of a preferred embodiment of the invention in regard of figure 1 that represents a system for provisioning devices, like loT devices or consumer equipments, with at least one profile of a MNO or MVNO. In this figure, an OEM factory 10 contains a plurality of devices 11 (also called DUT for "Device Under Test"), each device 11 comprising a secure element, like for example an eSIM or eUICC 12. Each eSIM 12 contains an applet 13 with an IPAe or LPAe and is pre-provisioned with a factory profile 14. In the OEM factory 10, a provisioning box 15 is also foreseen - the provisioning box 15 can be a standalone dedicated equipment or can be a private network used in the OEM factory and covering the production line.

Outside of the OEM factory 10, there is a server 16 which function will be explained below, Internet 17, and MNO partners 18 having each a SM-DP+ 19a, 19b and 19c storing profiles. The workflow of the method of the invention is the following:
At a preliminary step 100, a production planner configures the server 16 with rules mapping tag to pools of generic activation codes. Each tag comprises data corresponding to a target MNO SM-DP+ (tag1 for MNO1, tag2 for MNO2,...). The server 16 is an elM server (eSIM loT Manager) according to SGP.32.

Otherwise said, the production planner provisions in the server 16 the activation codes for the candidate MNOs for the devices 11 that are in production.

If the production planner wants to produce devices for a given MNO, for example Orange, he will provision in the server 16, for a fleet of devices 11, a tag (or label) corresponding to the Orange network. And as he knows which devices are to be provisioned in the factory 10, he can plan it well in advance, in order to configure the devices for its target market with the chosen MNO. Each tag corresponds to a pool of activation codes.

A tag is therefore either a number or a string referring to a pool of activation codes, each activation code being later on affected to a given device 11.

At step 21, a given device 11 (DUT) is powered on in factory mode (i.e. for using, for the moment, the sole factory profile 14 present in its secure element 12). Previously, the device 11 has been tagged with a target MNO thanks to the tag. This tag can be stored in the device 11, in the secure element, printed on a paper sticked on the device 11 or stored on the test PC controlling the device 11 on the factory line. A tag can be for example a QR code printed on the device 11. The important point is that this tag can be read and sent later on to the eSIM 12 at step 22.

When this power on is performed, the DUT 11 sends at step 22 the tag to the applet 13, for example through an API orAPDU.

For example, for smart meter product, if the production manager wants to deploy his products in France with a given MNO-A, at the tag server 16 level, he will set up a rule at the elM server side: "when I receive a request for a profile with a tag "Tag1", provide an activation code from this pool of activation codes from MNO-A.

At step 23, the DUT 11 connects to the private network comprised in the provisioning box 15. The applet 13 is then able to connect to the server 16 through the provisioning box 15 at step 24 to retrieve from the server 16 an activation code corresponding to the transmitted tag (step 22). This activation code is sent from the server 16 to the applet 13 and at step 25 the IPAe/LPAe retrieves from the SM-DP+ identified by the tag an eSIM profile (from 19a, 19b or 19c) corresponding to one of the profiles identified by the production planner at step 100. This profile can be then installed and activated (in a provisioned profile 20). The activation code acts as a right to download a profile.

In this invention the resolution is done indirectly via the tag. It is not necessary to have the tracking of the EID. What is important is to know which deployment and the resolution is done at the last moment at the server level.

The connection between the provisioning box 15 and the Internet 17 can be provided (either wired, fibered or cellular). This means that the device 11 can connect to the firewall of the factory and if a port is authorized to the provisioning box or a backhaul to the local network, connection is successful.

It is also possible to download multiple profiles, either one after each other, or at the same time (in parallel) if this is authorized by the production planner and in agreement with the MNO's partners.

The activation code is basically a right to download a profile that is sent to the MNO partners 19a -19-c. That's why an activation code is important.

The invention also concerns a method where the tag is sent to the secure element 12 through the telecommunication device 11.

The invention also concerns an applet 13 installed in a secure element 12 comprising an IPAe/LPAe, the applet 13 comprising instructions for executing the following steps:
- receiving a tag corresponding to a MNO to which the secure element 12 has to be connected;
- connecting to an external server 16 with the tag, the external server 16 comprising activation codes for the secure element 12 for downloading a profile of the MNO;
- receiving from the external server 16 the activation code;
- connecting through a provisioning box 15 the applet to a SM-DP+ 19a, 19b, 19c of the MNO in order to download the profile in the secure element 12 if the activation code is correct.

Finally, the invention concerns a server 16 external to a factory 10 intended for sending and installing a profile of a MNO 18 in a secure element 12 integrated in a telecommunication device 11, the sending and installing being done in the factory 10, the server 16 being configured for:
- receiving from a secure element 12 or the telecommunication device a tag corresponding to a MNO 18 from which a SM-DP+ 19a, 19b, 19c profile has to be installed, the server 16 having been before provisioned with activation codes of profiles stored at a SM-DP+ 19a, 19b, 19c of at least an elected MNO 18;
- Sending on the basis of the tag one of the activation codes to the secure element 12, the activation code corresponding to the MNO to which the secure element 12 has to be connected in order that the secure element 12 connects to a SM-DP+ 19a, 19b, 19c of the MNO 18 for downloading a profile from the MNO 18.

## Claims

1. Method for sending and installing a profile of a MNO in a secure element (12) integrated in a telecommunication device (11), said sending and installing being done in a factory (10), said method comprising:
- sending to said secure element (12) through said telecommunication device (11) a tag corresponding to a MNO to which said secure element (12) has to be connected;
- connecting, through a provisioning box (15), said secure element (12) to an external server (16) of said factory (10) that has been before provisioned with activation codes of profiles stored at SM-DP+ (19a, 19b, 19c) of at least an elected MNO (18);
- Retrieving on the basis of said tag one of said activation codes for said secure element (12) corresponding to the MNO to which said secure element (12) has to be connected;
- Sending said activation code through said provisioning box (15) to download a profile to said elected MNO (18);
- Sending, if said activation code is correct, a profile to said secure element (12) and installing it.

2. Method according to claim 1 wherein said tag is:
- stored in or on said telecommunication device (11) or
- stored in said secure element (12).

3. An applet (13) installed in a secure element (12) comprising an IPAe/LPAe, said applet (13) comprising instructions for executing the following steps:
- receiving a tag corresponding to a MNO (18) to which said secure element (12) has to be connected;
- connecting to an external server (16) with said tag, said external server (16) comprising activation codes for said secure element (12) for downloading a profile of said MNO (18);
- receiving from said external server (16) said activation code;
- connecting through a provisioning box (15) said applet to a SM-DP+ (19a, 19b, 19c) of said MNO (18) in order to download said profile in said secure element (12) if said activation code is correct.

4. A server (16) external to a factory (10) intended for sending and installing a profile of a MNO (18) in a secure element (12) integrated in a telecommunication device (11), said sending and installing being done in said factory (10), said server (16) being configured for:
- receiving from a secure element (12) or said telecommunication device a tag corresponding to a MNO (18) from which a SM-DP+ (19a, 19b, 19c) profile has to be installed, said server (16) having been before provisioned with activation codes of profiles stored at a SM-DP+ (19a, 19b, 19c) of at least an elected MNO (18);
- Sending on the basis of said tag one of said activation codes to said secure element (12), said activation code corresponding to the MNO to which said secure element (12) has to be connected in order that said secure element (12) connects to a SM-DP+ (19a, 19b, 19c) of said MNO (18) for downloading a profile from said MNO (18).
